# EUROPEAN PATENT APPLICATION

(11) **EP 4 832 228 A1**
(43) Date of publication of application: **28.10.2026**
(21) Application number: 25904909.6
(22) Date of filing: 21.11.2025
(51) Int. Cl.: H01M 50/507, H01M 50/553, H01M 50/533, H01M 50/15, H01M 50/105, H01M 10/658, H01M 10/0585

(54) **BATTERY CELL UNIT AND METHOD FOR MANUFACTURING BATTERY CELL UNIT**

(30) Priority: 09.12.2024 KR 20240182013
(71) Applicant: LG Energy Solution, Ltd., Seoul 07335 (KR)
(72) Inventor: KIM, So Young, Daejeon 34122 (KR)
(74) Representative: Plasseraud IP
(86) International application number: PCT/KR2025/019409
(87) International publication number: WO 2026/127434

(57) **Abstract**

The present disclosure provides a battery cell unit including: an external case provided with a terminal portion; a battery cell assembly accommodated in the external case and including a plurality of pouch battery cells; and a bus bar coupled to electrode leads of same polarity provided in the plurality of pouch battery cells and electrically connected to the terminal portion of the external case.

## Description

### [Technical Field]

The present disclosure relates to a battery cell unit and a method of manufacturing a battery cell unit, and more particularly, to a battery cell unit and a method of manufacturing a battery cell unit capable of securing thermal propagation (TP) stability by forming a high energy density and high capacity pouch cell into a unit.

This application claims the benefit of priority from Korean Patent Application No. 10-2024-0182013 filed on December 9, 2024, the entire contents disclosed therein are incorporated by reference into this disclosure.

### [Background]

A battery cell unit refers to a battery capable of charge and discharge, unlike a primary battery that cannot be charged, and is widely used in electronic devices such as mobile phones, laptops, and camcorders, or in electric vehicles.

In particular, the demand for high energy density and high capacity pouch cells is increasing.

However, when thermal runaway occurs in a pouch cell, a large impact and pressure are generated, and as a result, discharge matter such as high-temperature gas, a large amount of sparks, and conductive particles are ejected to the outside by penetrating through the pouch cell wrapped in a thin aluminum plate, making it difficult to secure thermal propagation stability.

Accordingly, there is a demand for a technology relating to a battery cell unit using a pouch cell capable of securing thermal propagation (TP) stability and a method of manufacturing a battery cell unit.

### [Summary]

### [Technical Problem]

A first technical problem to be achieved by the present disclosure is to provide a high capacity battery cell unit having thermal propagation (TP) stability by forming a high energy density and high capacity pouch cell into a unit.

A second technical problem to be achieved by the present disclosure is to provide a method of manufacturing a high capacity battery cell unit having thermal propagation (TP) stability by forming a high energy density and high capacity pouch cell into a unit.

### [Technical Solution]

In order to achieve the first technical problem, the present disclosure provides a battery cell unit comprising: an external case provided with a terminal portion; a battery cell assembly accommodated in the external case and including a plurality of pouch battery cells; and a bus bar coupled to electrode leads of same polarity provided in the plurality of pouch battery cells and electrically connected to the terminal portion of the external case.

In some embodiments, at least one of upper and lower ends of the bus bar may be connected to the terminal portion.

In some embodiments, the terminal portion includes a through-hole and a terminal part electrically connectable to an external terminal, and at least one of upper and lower ends of the bus bar may penetrate through the through-hole and be electrically connected to the terminal part.

In some embodiments, all or some of the electrode leads may be bent and then overlapped with each other to form an overlap portion.

In some embodiments, the bus bar includes an outer bus bar located on outside of the overlap portion of the electrode leads and an inner bus bar located on inside of the overlap portion of the electrode leads, the outer bus bar is electrically connected to the overlap portion and the inner bus bar, and at least one of the outer bus bar and the inner bus bar may be electrically connected to the terminal portion.

In some embodiments, the outer bus bar may be electrically connected to the overlap portion and the inner bus bar through spot welding.

In some embodiments, the external case may include: a housing providing shielded lower surface and side surfaces forming an accommodation space for accommodating the battery cell assembly; and a cap plate coupled to an upper surface of the housing to cover the battery cell assembly.

In some embodiments, the cap plate may include the terminal portion.

In some embodiments, an insulating layer may be provided on an inner surface of the external case facing the plurality of battery cells.

In some embodiments, the external case may have a hexahedral shape having an edge portion.

In order to achieve the second technical problem, the present disclosure provides a method of manufacturing a battery cell unit comprising: a battery cell assembly manufacturing step of arranging and fixing a plurality of pouch battery cells having electrode leads formed on both sides in a longitudinal direction in a stacking direction to manufacture a battery cell assembly; a bus bar connection step of connecting electrode leads of same polarity provided in the battery cell assembly to a bus bar; an external case accommodation step of accommodating the battery cell assembly connected with the bus bar in an external case; and a terminal portion coupling step of electrically coupling at least one of upper and lower ends of the bus bar to a terminal portion provided in the external case.

In some embodiments, the bus bar connection step may include an overlap portion formation step in which ends of the electrode leads are bent and then overlapped to form an overlap portion.

In some embodiments, the bus bar includes an outer bus bar located on outside of the overlap portion of the electrode leads and an inner bus bar located on inside of the overlap portion of the electrode leads, and the bus bar connection step may further include an inner and outer bus bar connection step of electrically connecting the outer bus bar to the overlap portion and the inner bus bar after the overlap portion formation step.

In some embodiments, the terminal portion includes a through-hole and a terminal part electrically connectable to an external terminal, and at least one of the outer bus bar and the inner bus bar may be electrically connected to the terminal part after passing the same through the through-hole in the terminal portion coupling step.

In some embodiments, in the inner and outer bus bar connection step, the outer bus bar may be electrically connected to the overlap portion and the inner bus bar through spot welding.

In some embodiments, the external case includes a housing providing shielded lower surface and side surfaces forming an accommodation space for accommodating the battery cell assembly connected with the bus bar, and a cap plate coupled to an upper surface of the housing to cover the battery cell assembly, and the external case accommodation step may arrange the battery cell assembly connected with the bus bar in the housing and couple the cap plate to the upper surface of the housing to cover the battery cell assembly connected with the bus bar.

In some embodiments, the cap plate includes the terminal portion, the terminal portion includes a through-hole and a terminal part electrically connectable to an external terminal, and at least one of the outer bus bar and the inner bus bar may be electrically connected to the terminal part after passing the same through the through-hole in the terminal portion coupling step.

### [Advantageous Effects]

A battery cell unit according to embodiments of the present disclosure has an effect of being capable of manufacturing a high capacity battery cell unit having thermal propagation (TP) stability by forming a high energy density and high capacity pouch cell into a unit.

The effects that can be obtained in exemplary embodiments of the present disclosure are not limited to the above-described effects, and other effects not mentioned can be clearly understood by a person skilled in the art from the description of the disclosure described below. In other words, unintended effects of implementing the exemplary embodiments of the present disclosure may also be derived from the exemplary embodiments of the present disclosure by a person skilled in the art.

### [Brief Description of the Drawings]

FIG. 1 is a diagram illustrating an exploded view of a battery cell unit according to an embodiment of the present disclosure.
FIG. 2 is a diagram exemplarily illustrating a process in which electrode leads of a battery cell unit overlap each other to form an overlap portion according to an embodiment of the present disclosure.
FIG. 3 is a diagram exemplarily illustrating a process in which an overlap portion of electrode leads and a bus bar of a battery cell unit are combined and then inserted into a through-hole of a terminal portion according to an embodiment of the present disclosure.
FIG. 4 is a diagram illustrating a battery cell unit according to an embodiment of the present disclosure.
FIG. 5 is a diagram illustrating a method of manufacturing a battery cell unit according to an embodiment of the present disclosure.
FIG. 6 is a perspective view of a battery pack according to exemplary embodiments of the present disclosure.
FIG. 7 is a perspective view illustrating some elements of a battery pack according to exemplary embodiments of the present disclosure.
FIG. 8 is a diagram schematically illustrating a configuration of a vehicle according to an embodiment of the present disclosure.

### [Detailed Description]

Hereinafter, preferred embodiments of the present disclosure concept will be described in detail with reference to the accompanying drawings. However, embodiments of the present disclosure concept may be modified in various different forms, and it should not be interpreted that the scope of the present disclosure concept is limited by the embodiments described below. It is preferred that the embodiments of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific embodiments and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some embodiments are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, embodiments of the present disclosure should not be construed as limited to the specific forms of the areas shown herein, and should include, for example, variations in form resulting from manufacturing processes. All terms "and/or" used herein are included each and every combination of one or more of the components mentioned. In addition, the term "substrate" as used herein may refer to the substrate itself, or a laminated structure including the substrate and a predetermined layer or film formed on the surface thereof. In addition, the term "surface of the substrate" as used herein may refer to the exposed surface of the substrate itself, or the outer surface of a predetermined layer or film formed on the substrate.

### (First Embodiment)

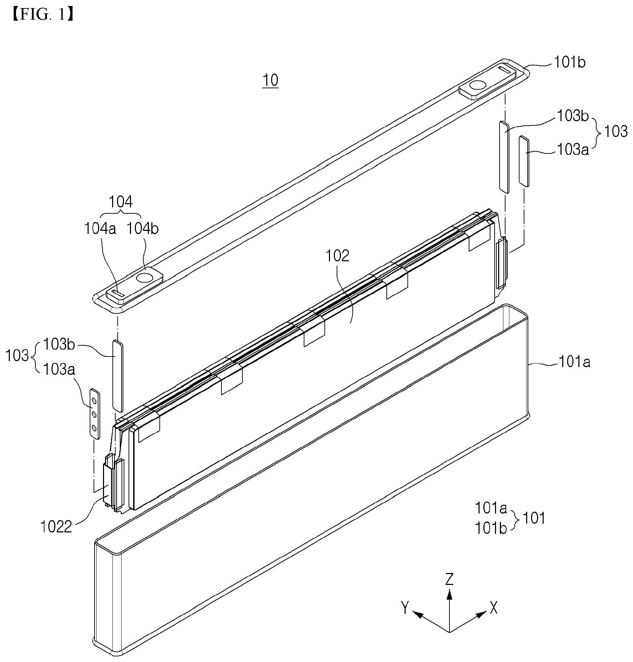

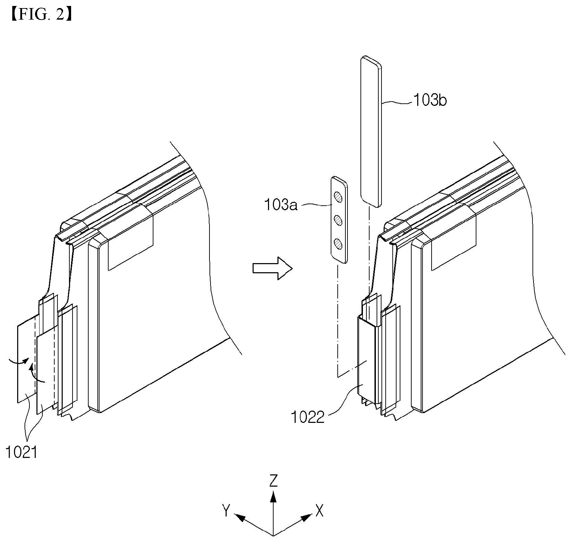

FIG. 1 is a diagram illustrating an exploded view of a battery cell unit 10 according to an embodiment of the present disclosure, and FIG. 2 is a diagram exemplarily illustrating a process in which electrode leads 1021 of a battery cell unit 10 overlap each other to form an overlap portion 1022 according to an embodiment of the present disclosure.

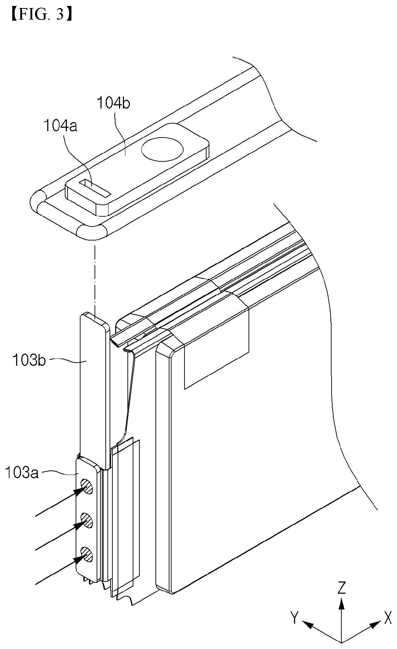

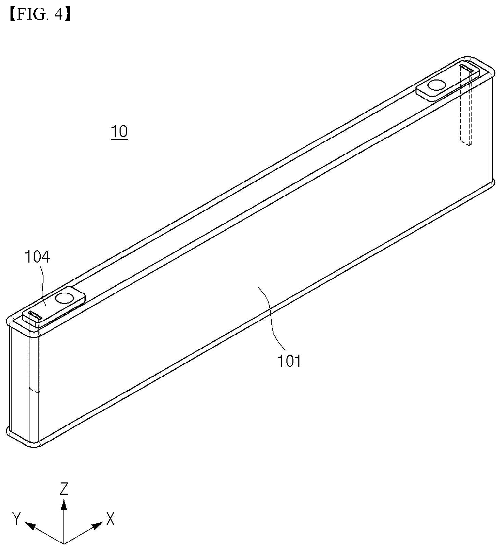

FIG. 3 is a diagram exemplarily illustrating a process in which an overlap portion 1022 of electrode leads 1021 and a bus bar 103 of a battery cell unit 10 are combined and then inserted into a through-hole 104a of a terminal portion 104 according to an embodiment of the present disclosure, and FIG. 4 is a diagram illustrating a battery cell unit 10 according to an embodiment of the present disclosure.

Referring to FIGS. 1, 2, 3, and 4, a battery cell unit 10 according to an embodiment of the present disclosure may include an external case 101, a battery cell assembly 102, and a bus bar 103.

A terminal portion 104 may be provided in the external case 101.

The terminal portion 104 may be connected to an external terminal so that current may flow in or out from the outside.

The battery cell assembly 102 may be accommodated in the external case 101 and may include a plurality of pouch battery cells.

The battery cell assembly 102 may be accommodated in the external case 101 and formed into a unit as a battery cell unit 10, thereby increasing thermal propagation (TP) stability.

In some embodiments, the battery cell assembly 102 may arrange and fix a plurality of pouch battery cells having electrode leads 1021 in a stacking direction (e.g., Y direction).

In some embodiments, the plurality of pouch battery cells may be fixed by adhering one or more of upper and lower portions of the pouch battery cells with tape or the like.

In some embodiments, the electrode lead 1021 provided in each pouch battery cell constituting the plurality of pouch battery cells may be provided on both sides in a longitudinal direction.

The bus bar 103 may be coupled to electrode leads 1021 of the same polarity provided in the plurality of pouch battery cells.

The bus bar 103 may be electrically connected to the terminal portion 104 of the external case 101.

The bus bar 103 may be connected to the terminal portion 104 so that current may flow in or out from the outside, and the current may flow in or out to the plurality of pouch battery cells through electrodes of the same polarity provided in the plurality of pouch battery cells coupled to the bus bar 103.

In some embodiments, at least one of upper and lower ends of the bus bar 103 may be connected to the terminal portion 104.

In some embodiments, the terminal portion 104 may include a through-hole 104a and a terminal part 104b electrically connectable to an external terminal, and at least one of the upper and lower ends of the bus bar 103 may penetrate through the through-hole 104a and be electrically connected to the terminal part 104b.

In some embodiments, the terminal part 104b may be formed surrounding the through-hole 104a.

At least one of the upper and lower ends of the bus bar 103 may penetrate through the through-hole 104a and then be electrically connected to the terminal part 104b formed surrounding the through-hole 104a through welding.

At least one of the upper and lower ends of the bus bar 103 may penetrate through the through-hole 104a and be electrically connected to the terminal part 104b, thereby preventing positional displacement of the bus bar 103 due to external impact.

Referring to FIG. 2, in some embodiments, all or some of the electrode leads 1021 may be bent to face each other and then overlapped with each other to form an overlap portion 1022.

By forming the overlap portion 1022, current may flow in or out to the electrode leads 1021 of the same polarity through the bus bar 103.

In some embodiments, the bus bar 103 may include an outer bus bar 103a located on the outside of the overlap portion 1022 of the electrode leads 1021 and an inner bus bar 103b located on the inside of the overlap portion 1022 of the electrode leads 1021, the outer bus bar 103a may be electrically connected to the overlap portion 1022 and the inner bus bar 103b, and at least one of the outer bus bar 103a and the inner bus bar 103b may be electrically connected to the terminal portion 104.

In some embodiments, at least one of the outer bus bar 103a and the inner bus bar 103b may penetrate through the through-hole 104a included in the terminal portion 104 and be electrically connected to the terminal part 104b.

In some embodiments, the outer bus bar 103a may be electrically connected to the overlap portion 1022 and the inner bus bar 103b through spot welding.

Referring to FIG. 3, spot welding may be performed on the outer bus bar 103a in a direction of an arrow after arranging the outer bus bar 103a, the overlap portion 1022, and the inner bus bar 103b in that order.

The outer bus bar 103a may be electrically connected to the overlap portion 1022 and the inner bus bar 103b through spot welding, thereby enabling the outer bus bar 103a, the overlap portion 1022, and the inner bus bar 103b to be electrically connected simply and quickly.

In some embodiments, the external case 101 may include a housing 101a and a cap plate 101b.

The housing 101a may provide a shielded lower surface and side surfaces forming an accommodation space for accommodating the battery cell assembly 102.

The cap plate 101b may be coupled to an upper surface of the housing 101a to cover the battery cell assembly 102.

In some embodiments, the cap plate 101b may include the terminal portion 104.

In some embodiments, the terminal portion 104 may include the through-hole 104a and the terminal part 104b electrically connectable to an external terminal, and at least one of the upper and lower ends of the bus bar 103 may penetrate through the through-hole 104a and be electrically connected to the terminal part 104b.

In some embodiments, the terminal part 104b may be formed surrounding the through-hole 104a.

At least one of the upper and lower ends of the bus bar 103 may penetrate through the through-hole 104a and be electrically connected to the terminal part 104b through welding.

In some embodiments, the terminal portion 104 may be formed on both sides of the cap plate 101b.

In some embodiments, an insulating layer may be provided on an inner surface of the external case 101 facing the battery cell assembly 102.

By providing an insulating layer on the inner surface of the external case 101 facing the battery cell assembly 102, when thermal propagation occurs in the battery cell assembly 102, the rate of thermal propagation may be slowed down.

In some embodiments, the external case 101 may have a hexahedral shape having an edge portion.

By having a hexahedral shape having an edge portion, the external case 101 may reduce empty space and increase space efficiency when manufacturing a battery pack by stacking the battery cell units 10.

### (Second Embodiment)

FIG. 1 is a diagram illustrating an exploded view of a battery cell unit 10 according to an embodiment of the present disclosure, and FIG. 2 is a diagram exemplarily illustrating a process in which electrode leads 1021 of a battery cell unit 10 overlap each other to form an overlap portion 1022 according to an embodiment of the present disclosure.

FIG. 3 is a diagram exemplarily illustrating a process in which an overlap portion 1022 of electrode leads 1021 and a bus bar 103 of a battery cell unit 10 are combined and then inserted into a through-hole 104a of a terminal portion 104 according to an embodiment of the present disclosure, and FIG. 4 is a diagram illustrating a battery cell unit 10 according to an embodiment of the present disclosure.

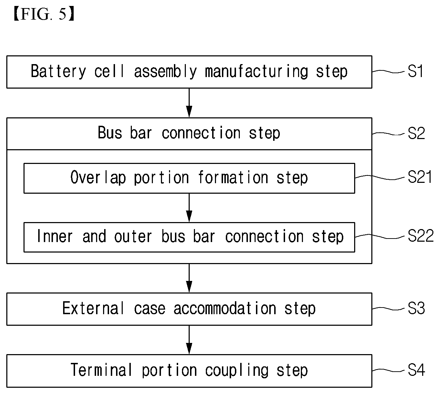

FIG. 5 is a diagram illustrating a method of manufacturing a battery cell unit 10 according to an embodiment of the present disclosure.

Referring to FIGS. 1 , 2, 3, 4, and 5, a method of manufacturing a battery cell unit 10 according to an embodiment of the present disclosure may include a battery cell assembly manufacturing step S1, a bus bar connection step S2, an external case accommodation step S3, and a terminal portion coupling step S4.

The battery cell assembly manufacturing step S1 may manufacture a battery cell assembly 102 by arranging and fixing a plurality of pouch battery cells having electrode leads 1021 formed on both sides in the longitudinal direction (e.g., X direction) in the stacking direction (e.g., Y direction).

In some embodiments, the plurality of pouch battery cells may be fixed by adhering one or more of the upper and lower portions of the pouch battery cells with tape or the like.

The bus bar connection step S2 may connect electrode leads 1021 of the same polarity provided in the battery cell assembly 102 to a bus bar 103.

The external case accommodation step S3 may accommodate the battery cell assembly 102 connected with the bus bar 103 in an external case 101.

The terminal portion coupling step S4 may electrically couple at least one of the upper and lower ends of the bus bar 103 to a terminal portion 104 provided in the external case 101.

Through the bus bar connection step S2 and the terminal portion coupling step S4, the bus bar 103 may be connected to the terminal portion 104 so that current may flow in or out from the outside, and the current may flow in or out to the plurality of pouch battery cells through electrodes of the same polarity provided in the plurality of pouch battery cells coupled to the bus bar 103.

In some embodiments, the bus bar connection step S2 may include an overlap portion formation step S21 in which ends of the electrode leads 1021 are bent and then overlapped to form an overlap portion 1022.

In some embodiments, the bus bar 103 may include an outer bus bar 103a located on the outside of the overlap portion 1022 of the electrode leads 1021 and an inner bus bar 103b located on the inside of the overlap portion 1022 of the electrode leads 1021, and the bus bar connection step S2 may further include an inner and outer bus bar connection step S22 of electrically connecting the outer bus bar 103a to the overlap portion 1022 and the inner bus bar 103b after the overlap portion formation step S21.

Referring to FIG. 2, in some embodiments, all or some of the electrode leads 1021 may be bent to face each other and then overlapped with each other to form the overlap portion 1022.

In some embodiments, the terminal portion 104 may include a through-hole 104a and a terminal part 104b electrically connectable to an external terminal, and the terminal portion coupling step S4 may electrically connect at least one of the outer bus bar 103a and the inner bus bar 103b to the terminal part 104b after passing the same through the through-hole 104a.

In some embodiments, in the inner and outer bus bar connection step S22, the outer bus bar 103a may be electrically connected to the overlap portion 1022 and the inner bus bar 103b through spot welding.

Referring to FIG. 3, spot welding may be performed on the outer bus bar 103a in the direction of the arrow after arranging the outer bus bar 103a, the overlap portion 1022, and the inner bus bar 103b in that order.

In some embodiments, the external case 101 may include a housing 101a providing shielded lower surface and side surfaces forming an accommodation space for accommodating the battery cell assembly 102 connected with the bus bar 103, and a cap plate 101b coupled to an upper surface of the housing 101a to cover the battery cell assembly 102, and the external case accommodation step S3 may arrange the battery cell assembly 102 connected with the bus bar 103 in the housing 101a and couple the cap plate 101b to the upper surface of the housing 101a to cover the battery cell assembly 102 connected with the bus bar 103.

In some embodiments, the cap plate 101b may include the terminal portion 104, the terminal portion 104 may include the through-hole 104a and the terminal part 104b electrically connectable to an external terminal, and the terminal portion coupling step S4 may electrically connect at least one of the outer bus bar 103a and the inner bus bar 103b to the terminal part 104b after passing the same through the through-hole 104a.

### (Third Embodiment)

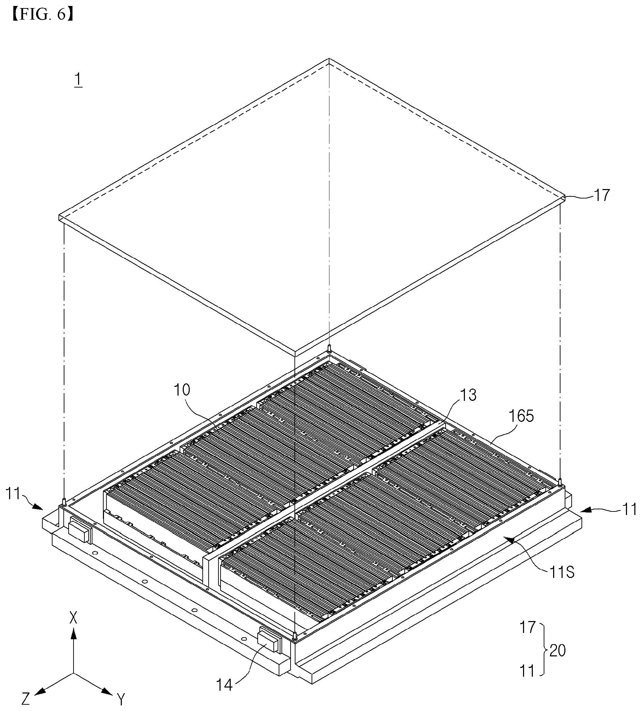

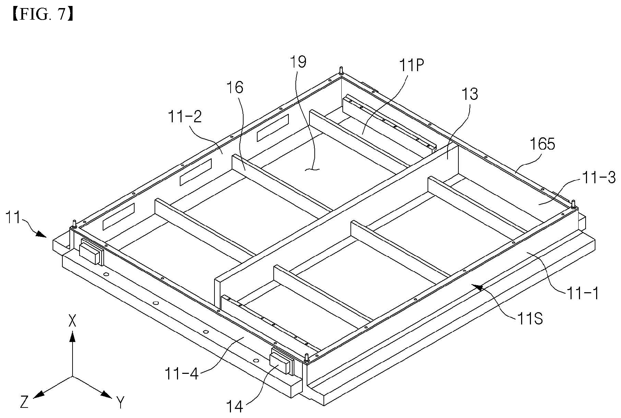

FIG. 6 is a perspective view of a battery pack according to exemplary embodiments of the present disclosure, and FIG. 7 is a perspective view illustrating some elements of a battery pack according to exemplary embodiments of the present disclosure.

Referring to FIGS. 6 and 7, a battery pack 1 may include a lower case 11, battery cell units 100, a center beam 13, a cross beam 16, a plurality of venting devices 14, a pack gasket 165, and an upper case 17. The battery pack 1 may be a final form of a battery system mounted on mobility or the like. In addition, the battery cell units 100 may be one or more types of the battery cell units 100 described with reference to FIGS. 1, 2, 3, and 4.

A pack housing 20 defining the exterior of the battery pack 1 may include the lower case 11 and the upper case 17.

A lower case 11 may provide an inner space 19 for mounting a plurality of battery cell units 100. In some embodiments, the lower case 11 may include a plate portion 11P and a side wall 11S. Two directions substantially parallel to the plate portion 11P are defined as a first direction (e.g., Z-axis direction) and a second direction (e.g., Y-axis direction), and a direction substantially perpendicular to the plate portion 11P of the lower case 11 is defined as a third direction (e.g., X-axis direction).

A plurality of battery cell units 100 may be disposed on the plate portion 11P of the lower case 11. The plate portion 11P may support the plurality of battery cell units 100. The plate portion 11P may include a substantially parallel upper surface and lower surface. The upper surface of the plate portion 11P may face the plurality of battery cell units 100. The lower surface of the plate portion 11P is opposite to the upper surface of the plate portion 11P.

The side wall 11S may horizontally surround the plurality of battery cell units 100. The side wall 11S may protect the plurality of battery cell units 100 from a lateral direction. The side wall 11S may include a first side wall 11-1, a second side wall 11-2, a third side wall 11-3, and a fourth side wall 11-4. The first, second, third, and fourth side walls 11-1, 11-2, 11-3, and 11-4 may be fixed to each other by methods such as friction stir welding, spot welding, or the like, and are not particularly limited.

The first and second side walls 11-1 and 11-2 may be substantially perpendicular to the second direction (e.g., Y-axis direction). The third and fourth side walls 11-3 and 11-4 may be substantially perpendicular to the stacking direction (e.g., Z-axis direction). In some embodiments, the first and second side walls 11-1 and 11-2 may cover the side surfaces of the plate portion 11P. In some embodiments, the third and fourth side walls 11-3 and 11-4 may be disposed on the plate portion 11P.

In some embodiments, the first, second, third, and fourth side walls 11-1, 11-2, 11-3, and 11-4 may be provided by an extrusion process. According to exemplary embodiments, the first, second, third, and fourth side walls 11-1, 11-2, 11-3, and 11-4 may include empty spaces therein, and accordingly the side wall 11S may be lightweighted. According to exemplary embodiments, the empty spaces of the first, second, third, and fourth side walls 11-1, 11-2, 11-3, and 11-4 may be any one of a venting path for gas and a channel for coolant.

Hereinafter, the technical idea of the present disclosure will be described with reference to an embodiment in which each of the plurality of battery cell units 100 does not include a module frame. However, this is a non-limiting example and does not limit the technical idea of the present disclosure in any sense. A person having ordinary skill in the art will be able to easily arrive at a battery pack employing battery modules including a module frame that exposes one edge of the battery cells based on what is described herein.

The center beam 13 may isolate elements mounted on the lower case 11 from each other. Accordingly, the center beam 13 may protect the plurality of battery cell units 100 while preventing unwanted short circuits therebetween.

The center beam 13 may extend between the third and fourth side walls 11-3 and 11-4. The center beam 13 may extend in the first direction (e.g., Z-axis direction). The center beam 13 may be in contact with the third side wall 11-3 and the fourth side wall 11-4. The center beam 13 may isolate the plurality of battery cell units 100 from each other. The center beam 13 may be interposed between the plurality of battery cell units 100. In some embodiments, the center beam 13 may divide the inner space 19 into two regions in the second direction (e.g., Y-axis direction).

In some embodiments, the cross beam 16 may be provided to divide the inner space 19 into two or more regions in the first direction (e.g., Z-axis direction). The cross beam 16 may further isolate the elements isolated by the center beam 13.

Some cross beams 16 may extend in the second direction (e.g., Y-axis direction) between the center beam 13 and the first side wall 11-1. Other cross beams 16 may extend in the second direction (e.g., Y-axis direction) between the center beam 13 and the second side wall 11-2. In some embodiments, the cross beam 16 may be provided to define a space in which a stack of one battery cell unit or a group of battery cell units is accommodated.

The arrangement of the center beam 13, the cross beam 16, and the plurality of battery cell units 100 disclosed in FIG. 6 and FIG. 7 is a non-limiting example and does not limit the technical idea of the present disclosure in any sense. A person having ordinary skill in the art will be able to easily arrive at a battery pack including various arrangements and numbers of center beams and battery cells based on what is described herein.

In some embodiments, a plurality of venting devices 14 may be coupled to the fourth side wall 11-4. The fourth side wall 11-4 may include a plurality of venting holes connected to the plurality of venting devices 14. The plurality of venting holes may be configured to provide a path for discharging gas and heat from inside the battery pack 1.

The plurality of venting devices 14 may be configured to delay thermal propagation by discharging high-temperature gas inside the battery pack 1 to the outside when at least one of the plurality of battery cell units 100 is in a thermal runaway state.

Here, thermal runaway of the plurality of battery cell units 100 is a state in which a temperature change of the plurality of battery cell units 100 further accelerates the temperature change, which is an uncontrollable positive feedback. The plurality of battery cell units 100 in a thermal runaway state may exhibit a rapid temperature rise and discharge a large amount of high-pressure gas and combustion debris.

The battery pack 1 may further include electrical components. In some embodiments, the electrical components may be mounted on the lower case 11. In some embodiments, the electrical components may be disposed between the fourth side wall 11-4 on which the venting devices 14 are installed and the plurality of battery cell units 100. In some embodiments, the electrical components may include any electronic element necessary for driving the battery pack.

In some embodiments, the electrical components may include, for example, a battery management system (BMS). The BMS may be configured to perform monitoring, balancing, and control of the battery pack. In some embodiments, the monitoring of the battery pack 1 may include measuring voltage and current of a specific battery cell among the plurality of battery cell units 100 and measuring temperatures at set positions inside the battery pack 1. In some embodiments, the battery pack 1 may include measuring instruments for measuring the voltage, current, and temperature described above.

The balancing of the battery pack 1 may be an operation of reducing deviations among the plurality of battery cell units 100. The control of the battery pack 1 may include preventing occurrence of overcharging, over-discharging, and overcurrent. Through monitoring, balancing, and control, the battery pack 1 may operate under optimal conditions, and accordingly, shortening of the lifespan of each of the plurality of battery cell units 100 may be prevented or reduced.

The electrical components may further include a cooling device, a power relay assembly (PRA), a safety plug, and the like. The cooling device may include a cooling fan. The cooling fan may prevent overheating of each of the plurality of battery cell units 100 by circulating air inside the battery pack 1. The PRA may be configured to supply or cut off power of a high-voltage battery to an external load (e.g., a motor of a vehicle). The PRA may protect the plurality of battery cell units 100 and the external load (e.g., a motor of a vehicle) by cutting off power supply to the external load (e.g., a motor of a vehicle) in a situation where an abnormal voltage such as a voltage surge occurs.

The battery pack 1 may further include a plurality of cell unit bus bars configured to electrically connect the plurality of battery cell units 100. The plurality of battery cell units 100 may be connected in series and/or in parallel by the plurality of cell unit bus bars. Accordingly, the battery pack 1 may be configured to output a high voltage to an external load (e.g., a motor of a vehicle).

The gasket 165 may include a material having elasticity in response to applied pressure. The gasket 165 may include, for example, rubber synthesized from a material such as ethylenepropylene diene monomer (EPDM). When the lower case 11 and the upper case 17 are coupled, the gasket 165 may be interposed between the lower case 11 and the upper case 17. The lower case 11 and the upper case 17 may press the gasket 165 so that some deformation occurs in the gasket 165. Accordingly, the battery pack 1 may be sealed, and external fluid may be blocked from the inner space of the battery pack 1.

The upper case 17 may be coupled to the lower case 11. In some embodiments, the upper case 17 may include a main surface and a peripheral portion. The main surface may cover elements mounted on the battery pack 1, such as the plurality of battery cell units 100 and electrical components. The peripheral portion is a surface in contact with the lower case 11. In some embodiments, the upper case 17 may have a flat plate shape, in which case the peripheral portion may horizontally surround the main surface. In some embodiments, the main surface may be elevated relative to the peripheral portion, and the peripheral portion and the main surface may be connected by a curved portion.

### (Fourth Embodiment)

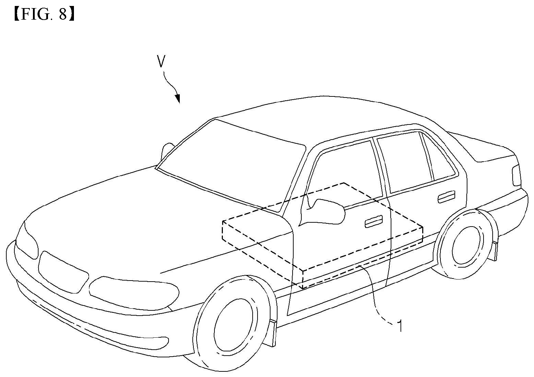

FIG. 8 is a diagram schematically illustrating a configuration of a vehicle according to an embodiment of the present disclosure.

Referring to FIG. 8, a vehicle V according to an embodiment of the present disclosure may include the battery pack 1 according to an embodiment of the present disclosure described above. Here, the vehicle V may include, for example, a predetermined vehicle using electricity as a driving source, such as an electric vehicle or a hybrid vehicle. In addition, the vehicle V may further include various other components included in a vehicle, such as a vehicle body and a motor, in addition to the battery pack 1 according to the present disclosure.

The battery pack 1 may be disposed at a predetermined position within the vehicle V. The battery pack 1 may be used as an electric energy source for driving the vehicle V by providing driving force to a motor of an electric vehicle. In this case, the battery pack 1 may have a high nominal voltage of 100V or more.

The battery pack 1 may be charged or discharged by an inverter according to driving of a motor and/or an internal combustion engine. The battery pack 1 may be charged by a regenerative charging device combined with a brake. The battery pack 1 may be electrically connected to a motor of the vehicle V through an inverter.

Although the embodiments of the present disclosure have been described in detail as described above, a person having ordinary skill in the art to which the present disclosure belongs will be able to implement the present disclosure with various modifications without departing from the spirit and scope of the present disclosure as defined in the appended claims. Accordingly, future modifications of the embodiments of the present disclosure will not be able to depart from the technology of the present disclosure.

### [Description of Reference Numerals]

10: battery cell unit
101: external case
101a: housing
101b: cap plate
102: battery cell assembly
1021: electrode lead
1022: overlap portion
103: bus bar
103a: outer bus bar
103b: inner bus bar
104: terminal portion
104a: through-hole
104b: terminal part
S1: battery cell assembly manufacturing step
S2: bus bar connection step
S21: overlap portion formation step
S22: inner and outer bus bar connection step
S3: external case accommodation step
S4: terminal portion coupling step

## Claims

1. A battery cell unit comprising:
an external case provided with a terminal portion;
a battery cell assembly accommodated in the external case and comprising a plurality of pouch battery cells; and
a bus bar coupled to electrode leads of same polarity provided in the plurality of pouch battery cells and electrically connected to the terminal portion of the external case.

2. The battery cell unit of claim 1, wherein at least one of upper and lower ends of the bus bar is connected to the terminal portion.

3. The battery cell unit of claim 1, wherein the terminal portion comprises a through-hole and a terminal part electrically connectable to an external terminal, and
wherein at least one of upper and lower ends of the bus bar penetrates through the through-hole and is electrically connected to the terminal part.

4. The battery cell unit of claim 1, wherein all or some of the electrode leads are bent and then overlapped with each other to form an overlap portion.

5. The battery cell unit of claim 4, wherein the bus bar comprises an outer bus bar located on outside of the overlap portion of the electrode leads and an inner bus bar located on inside of the overlap portion of the electrode leads,
wherein the outer bus bar is electrically connected to the overlap portion and the inner bus bar, and
wherein at least one of the outer bus bar and the inner bus bar is electrically connected to the terminal portion.

6. The battery cell unit of claim 5, wherein the outer bus bar is electrically connected to the overlap portion and the inner bus bar through spot welding.

7. The battery cell unit of claim 1, wherein the external case comprises:
a housing providing shielded lower surface and side surfaces forming an accommodation space for accommodating the battery cell assembly; and
a cap plate coupled to an upper surface of the housing to cover the battery cell assembly.

8. The battery cell unit of claim 7, wherein the cap plate comprises the terminal portion.

9. The battery cell unit of claim 1, wherein an insulating layer is provided on an inner surface of the external case facing the battery cell assembly.

10. The battery cell unit of claim 1, wherein the external case has a hexahedral shape having an edge portion.

11. A method of manufacturing a battery cell unit, the method comprising:
a battery cell assembly manufacturing step of arranging and fixing a plurality of pouch battery cells having electrode leads formed on both sides in a longitudinal direction in a stacking direction to manufacture a battery cell assembly;
a bus bar connection step of connecting electrode leads of same polarity provided in the battery cell assembly to a bus bar;
an external case accommodation step of accommodating the battery cell assembly connected with the bus bar in an external case; and
a terminal portion coupling step of electrically coupling at least one of upper and lower ends of the bus bar to a terminal portion provided in the external case.

12. The method of claim 11, wherein the bus bar connection step comprises:
an overlap portion formation step in which ends of the electrode leads are bent and then overlapped to form an overlap portion.

13. The method of claim 12, wherein the bus bar comprises an outer bus bar located on outside of the overlap portion of the electrode leads and an inner bus bar located on inside of the overlap portion of the electrode leads, and
wherein the bus bar connection step further comprises:
an inner and outer bus bar connection step of electrically connecting the outer bus bar to the overlap portion and the inner bus bar after the overlap portion formation step.

14. The method of claim 13, wherein the terminal portion comprises a through-hole and a terminal part electrically connectable to an external terminal, and
wherein at least one of the outer bus bar and the inner bus bar is electrically connected to the terminal part after passing the at least one of the outer bus bar and the inner bus bar through the through-hole in the terminal portion coupling step.

15. The method of claim 13, wherein in the inner and outer bus bar connection step, the outer bus bar is electrically connected to the overlap portion and the inner bus bar through spot welding.

16. The method of claim 11, wherein the external case comprises a housing providing shielded lower surface and side surfaces forming an accommodation space for accommodating the battery cell assembly connected with the bus bar, and a cap plate coupled to an upper surface of the housing to cover the battery cell assembly, and
wherein the external case accommodation step comprises:
arranging the battery cell assembly connected with the bus bar in the housing, and
coupling the cap plate to the upper surface of the housing to cover the battery cell assembly connected with the bus bar.

17. The method of claim 16, wherein the cap plate comprises the terminal portion,
wherein the terminal portion comprises a through-hole and a terminal part electrically connectable to an external terminal, and
wherein at least one of an outer bus bar and an inner bus bar is electrically connected to the terminal part after passing the at least one of the outer bus bar and the inner bus bar through the through-hole in the terminal portion coupling step.
